# EUROPEAN PATENT APPLICATION

(11) **EP 3 431 213 A1**
(43) Date of publication of application: **23.01.2019**
(21) Application number: 18182622.3
(22) Date of filing: 10.07.2018
(51) Int. Cl.: B23F 21/08, B23F 21/26, B23F 15/00, B23F 17/00

(54) **A TOOL, AN APPARATUS FOR MACHINING SPLINES ON A WORKPIECE AND A METHOD OF MACHINING SPLINES ON A WORKPIECE**

(30) Priority: 17.07.2017 GB 201711432
(71) Applicant: Rolls-Royce plc, London SW1E 6AT (GB)
(72) Inventor: Khan, Sufyan, Derby, Derbyshire DE24 8BJ (GB); Cook, Ben, Derby, Derbyshire DE24 8BJ (GB)
(74) Representative: Rolls-Royce plc

(57) **Abstract**

A tool (56) for machining splines (31) on a workpiece (42, 30) comprises a base (66), a first tooth (68) extending radially from the base (66) and a second tooth (70) extending radially from the base (68). The second tooth (70) is spaced circumferentially from the first tooth (68). The first tooth (68) has a first height (h₁), the second tooth (70) has a second height (h₂) and the second height (h₂) is less than the first height (h₁). The first tooth (68) tapers from the base (66) to the tip of the first tooth (68), the second tooth (70) tapers from the base (66) to the tip of the second tooth (70) and the first tooth (68) is identical to the second tooth (70) to the second height (h₂).

## Description

The present disclosure concerns a tool, an apparatus for machining splines on a workpiece and a method of machining splines on a workpiece. Splines are provided on an internal surface of a sun gear and on an external surface of a shaft to transmit torque between the sun gear and the shaft or visa-versa. The outer surface of the sun gear has teeth to transmit torque between the sun gear and meshing planet gears. Similarly, splines are provided on internal and external surfaces of coaxial adjacent shafts, or portions of coaxial adjacent shafts, to transmit torque there between.

A geared turbofan gas turbine engine or a geared turbo propeller gas turbine engine comprises a gearbox which is arranged to drive the fan or propeller. The gearbox allows the fan, or the propeller, to rotate at a speed less than the speed of rotation of a turbine driving the gearbox. This enables the efficiency of the fan, or the propeller, and the efficiency of the turbine to be improved.

In one arrangement the gearbox comprises a sun gear which is arranged to be driven by a turbine, an annulus gear which is arranged to be static, planet gears meshing with the sun gear and the annulus gear and a carrier which is arranged to drive the fan, or the propeller, if the gearbox is a planetary gearbox. In another arrangement the gearbox comprises a sun gear which is arranged to be driven by a turbine, an annulus gear which is arranged to drive the fan, or the propeller, planet gears meshing with the sun gear and the annulus gear and a carrier which is arranged to be static if the gearbox is a star gearbox. In a further arrangement the gearbox comprises a sun gear which is arranged to be driven by a turbine, an annulus gear which is arranged to drive a first fan, or a first propeller, planet gears meshing with the sun gear and the annulus gear and a carrier which is arranged to drive a second fan, or a second propeller, if the gearbox is a differential gearbox.

The present disclosure seeks to provide a tool and method of machining splines in a workpiece which reduces or overcomes this problem.

According to a first aspect of the present disclosure there is provided a tool for machining splines on a workpiece, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height.

The second height may be half the first height.

The first tooth may have straight sides extending from the base to the tip of the first tooth and the second tooth has straight sides extending from the base to the tip of the second tooth. The first tooth may have a width measured between the sides of the first tooth and the second tooth has a width measured between the sides of the second tooth.

The width of the first tooth at each height between the point of connection of the first tooth to the base and the point of the first tooth at the second height may be the same as the width of the second tooth at the same height between the point of connection of the second tooth to the base and the tip of the second tooth at the second height.

The tool may have a third tooth extending radially from the base, the third tooth being spaced circumferentially from the first tooth, the first tooth being located mid-way between second tooth and the third tooth, the third tooth having a third height, the third height being less than the first height and equal to the second height, the third tooth tapering from the base to the tip of the third tooth, the third tooth being identical to the second tooth.

The third tooth may have straight sides extending from the base to the tip of the third tooth. The third tooth may have a width measured between the sides of the third tooth.

The width of the third tooth at each height between the point of connection of the third tooth to the base and the tip of the third tooth at the second height may be the same as the width of the second tooth at the same height between the point of connection of the second tooth to the base and the tip of the second tooth at the second height.

The teeth may extend radially outwardly or the teeth may extend radially inwardly.

According to a second aspect of the present disclosure there is provided an apparatus for machining splines on a workpiece, the apparatus comprising a machining centre having at least four/five axes of freedom, a tool holder and a tool, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height.

The second height may be half the first height.

The tool may have a third tooth extending radially from the base, the third tooth being spaced circumferentially from the first tooth, the first tooth being located mid-way between second tooth and the third tooth, the third tooth having a third height, the third height being less than the first height and equal to the second height, the third tooth tapering from the base to the tip of the third tooth, the third tooth being identical to the second tooth.

The teeth may extend radially outwardly or the teeth may extend radially inwardly.

According to a third aspect of the present disclosure there is provided a method of machining splines on a workpiece, the method comprising providing a tool, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height, the workpiece having an axis of rotation, arranging the workpiece and the tool such that they are rotatable relative to each other around the axis of rotation of the workpiece, arranging the workpiece and the tool such that they are movable relative to each other axially of the workpiece, moving the tool axially towards and through the workpiece a first predetermined number of times such that the first tooth rough cuts an initial portion of a spline, moving the tool axially towards and through the workpiece a second predetermined number of times such that the first tooth rough cuts a remaining portion of the spline and the second tooth rough cuts an initial portion of an adjacent spline, relatively rotating the workpiece and tool to a predetermined number of circumferentially spaced positions, at each circumferential position moving the tool axially towards and through the workpiece a second predetermined number of times such that the first tooth rough cuts a remaining portion of the adjacent spline and the second tooth roughs cut an initial portion of a further adjacent spline, relatively rotating the workpiece and tool to a final circumferential position, at the final circumferential position moving the tool axially towards and through the workpiece a second predetermined number of times such that the first tooth rough cuts a remaining portion of a further adjacent spline to form the final spline.

According to a fourth aspect of the present disclosure there is provided a method of machining splines on a workpiece, the method comprising providing a tool, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height, the workpiece having an axis of rotation, arranging the workpiece and the tool such that they are rotatable relative to each other around the axis of rotation of the workpiece, arranging the workpiece and the tool such that they are movable relative to each other axially of the workpiece, moving the tool axially towards and through the workpiece a first predetermined number of times such that the first tooth rough cuts an initial portion of a first axially extending slot, moving the tool axially towards and through the workpiece a second predetermined number of times such that the first tooth rough cuts a remaining portion of the first axially extending slot and the second tooth rough cuts an initial portion of a second axially extending slot, relatively rotating the workpiece and tool such that the first tooth is aligned circumferentially with the second axially extending slot, moving the tool axially towards and through the workpiece a second predetermined number of times such that the first tooth rough cuts a remaining portion of the second axially extending slot to form a first spline and the second tooth roughs cut an initial portion of a third axially extending slot.

The method may comprise relatively rotating the workpiece and tool to a further circumferential position such that the first tooth is aligned circumferentially with the third axially extending slot, moving the tool axially towards and through the workpiece a second predetermined number of times such that the first tooth rough cuts a remaining portion of the third axially extending slot to form a second spline and the second tooth rough cuts an initial portion of a fourth axially extending slot.

The method may comprise relatively rotating the workpiece and tool to a final circumferential position such that the second tooth is aligned circumferentially with the first axially extending slot, moving the tool axially towards and through the workpiece a second predetermined number of times such that the first tooth rough cuts a remaining portion of a final axially extending slot to form the final spline.

According to a fifth aspect of the present disclosure there is provided a method of machining splines on a workpiece, the method comprising providing a tool, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height, the workpiece having an axis of rotation, arranging the workpiece and the tool such that they are rotatable relative to each other around the axis of rotation of the workpiece, arranging the workpiece and the tool such that they are movable relative to each other axially of the workpiece, moving the tool axially towards and through the workpiece a first predetermined number of times such that the first tooth rough cuts an initial portion of each of the confronting faces of first and second circumferentially adjacent axially extending splines, moving the tool axially towards and through the workpiece a second predetermined number of times such that the first tooth rough cuts a remaining portion of each of the confronting faces of the first and the second circumferentially adjacent axially extending splines and the second tooth rough cuts an initial portion of each of the confronting faces of second and third circumferentially adjacent axially extending splines, relatively rotating the workpiece and tool such that the first tooth is aligned circumferentially between the second and third circumferentially adjacent axially extending splines, moving the tool axially towards and through the workpiece a second predetermined number of times such that the first tooth rough cuts a remaining portion of each of the second and third circumferentially spaced axially extending splines to form the second spline and the second tooth roughs cut an initial portion of each of the confronting faces of third and fourth circumferentially spaced axially extending splines.

The method may comprise relatively rotating the workpiece and tool to a further circumferential position such that the first tooth is aligned circumferentially between the third and fourth circumferentially spaced axially extending splines, moving the tool axially towards and through the workpiece a second predetermined number of times such that the first tooth rough cuts a remaining portion of each of the confronting surfaces of the third and fourth circumferentially spaced axially extending splines to form the third spline and the second tooth rough cuts an initial portion of each of the confronting faces of fourth and fifth circumferentially spaced axially extending splines.

The method may comprise relatively rotating the workpiece and tool to a final circumferential position such that the second tooth is aligned circumferentially between the first and second circumferentially spaced axially extending splines, moving the tool axially towards and through the workpiece a second predetermined number of times such that the first tooth rough cuts a remaining portion of each of the confronting faces of the final and first circumferentially spaced axially extending splines to form the final and first splines.

According to a sixth aspect of the present disclosure there is provided a method of machining splines on a workpiece, the method comprising providing a tool, the tool comprising a base, a first tooth extending radially from the base, a second tooth extending radially from the base, the second tooth being spaced circumferentially from the first tooth, the first tooth having a first height, the second tooth having a second height, the second height being less than the first height, the first tooth tapering from the base to the tip of the first tooth, the second tooth tapering from the base to the tip of the second tooth, the first tooth being identical to the second tooth to the second height, the workpiece having an axis of rotation, arranging the workpiece and the tool such that they are rotatable relative to each other around the axis of rotation of the workpiece, arranging the workpiece and the tool such that they are movable relative to each other axially of the workpiece, moving the tool axially towards and through the workpiece a first predetermined number of times such that the first tooth rough cuts an initial portion of a first axially extending slot, moving the tool axially towards and through the workpiece a second predetermined number of times such that the first tooth rough cuts a remaining portion of the first axially extending slot and the second tooth rough cuts an initial portion of a second axially extending slot, relatively rotating the workpiece and tool to a circumferential position in which the first tooth of the tool is aligned with a desired position of a further slot between two adjacent circumferentially spaced axially extending splines and the tool is moved axially towards and through the workpiece a first predetermined number of times such that the first tooth rough cuts an initial portion of the further slot and then the tool is moved axially towards and through the workpiece a second predetermined number of times such that the first tooth rough cuts a remaining portion of the further slot and the second tooth rough cuts an initial portion of slot adjacent to the further slot.

The second height may be half the first height.

The tool may have a third tooth extending radially from the base, the third tooth being spaced circumferentially from the first tooth, the first tooth being located mid-way between second tooth and the third tooth, the third tooth having a third height, the third height being less than the first height and equal to the second height, the third tooth tapering from the base to the tip of the third tooth, the third tooth being identical to the second tooth.

The method may comprise initially providing a predetermined distance between the tool and the workpiece such that the tool reaches a minimum velocity to cut the workpiece.

The tool may be arranged to cut the slots, or splines, at top dead centre of the workpiece.

The tool may be provided on a cylindrical tool holder.

The cylindrical tool holder may have a plurality of circumferentially arranged of tools, each tool comprising a first tooth and a second tooth.

The cylindrical tool holder may have two tools arranged 180° apart, each tool comprising a first tooth and a second tooth.

The method may comprise heat treating the workpiece after rough cutting the splines on the workpiece.

The method may comprise final machining the splines using a tool with a single tooth after heat treating the workpiece.

The method may comprise machining the splines on an internal surface of the workpiece and then machining gear teeth on an external surface of the workpiece. The method may comprise machining helical gear teeth of a single helical gear or the helical gear teeth of a double helical gear.

The method may comprise machining the splines on an external surface of the workpiece and then machining gear teeth on an internal surface of the workpiece. The method may comprise machining helical gear teeth of a single helical gear or the helical gear teeth of a double helical gear.

The method may comprise machining the gear teeth using a pencil tool having an involute profile.

The skilled person will appreciate that except where mutually exclusive, a feature described in relation to any one of the above aspects of the invention may be applied mutatis mutandis to any other aspect of the invention.

Embodiments of the disclosure will now be described by way of example only, with reference to the Figures, in which:
Figure 1 is a part sectional side view of a geared turbofan gas turbine engine according to the present disclosure.
Figure 2 is an enlarged part sectional side view of a portion of the geared turbofan gas turbine engine shown in Figure 1.
Figure 3 is a schematic diagram of an apparatus for machining splines on a workpiece according to the present disclosure.
Figure 4 is an enlarged view in the direction of arrow A in figure 3 showing a tool for machining splines on a workpiece according to the present disclosure.
Figure 5 is an enlarged perspective view of the apparatus for machining splines on a workpiece according to the present disclosure.
Figure 6 is an enlarged view in the direction of arrow A in figure 3 showing an alternative tool for machining splines on a workpiece according to the present disclosure.
Figure 7 is a partially cut-away view of a gearbox for a gas turbine engine.
Figure 8 is a further enlarged perspective view of a sun gear of the gearbox shown in figure 7.

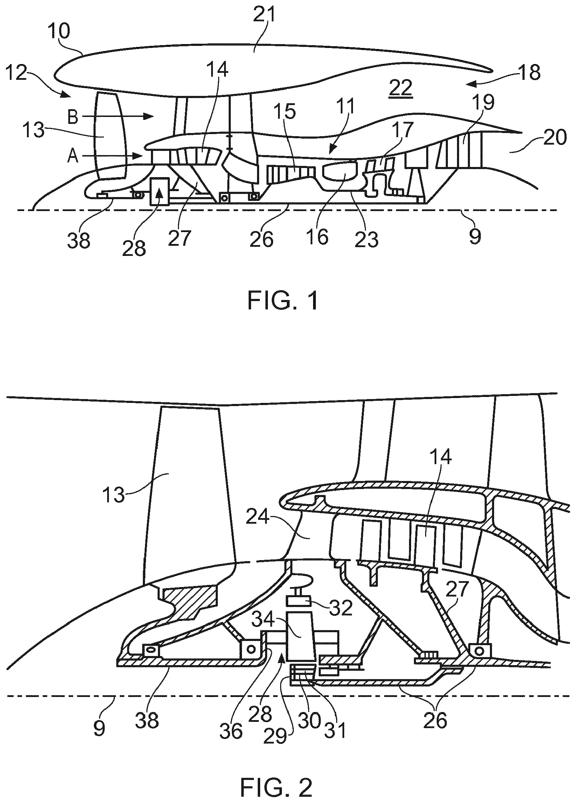

With reference to Figures 1, 2, 7 and 8, a geared turbofan gas turbine engine is generally indicated at 10, having a principal and rotational axis 9. The engine 10 comprises, in axial flow series, an air intake 12, a propulsive fan 13, an intermediate-pressure, or booster, compressor 14, a high-pressure compressor 15, combustion equipment 16, a high-pressure turbine 17, a low-pressure turbine 19 and a core exhaust nozzle 20. The intermediate-pressure compressor 14, the high-pressure compressor 15, the combustion equipment 16, the high-pressure turbine 17 and the low-pressure turbine 19 form a core engine 11. A nacelle 21 generally surrounds the engine 10 and defines the intake 12, a bypass duct 22 and a bypass exhaust nozzle 18.

The gas turbine engine 10 works in the conventional manner so that air entering the intake 12 is compressed by the fan 13 to produce two air flows: a first air flow A into the intermediate-pressure compressor 14 and a second air flow B which passes through the bypass duct 22 to provide the majority of the propulsive thrust. The intermediate-pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high and low-pressure turbines 17, 19 before being exhausted through the core nozzle 20 to provide additional propulsive thrust. The high-pressure turbine 17 drives the high-pressure compressor 15 by a shaft 23. The low-pressure turbine 19 drives the intermediate-pressure compressor 14 directly via shafts 26 and 27. The low-pressure turbine 19 drives the fan 13 indirectly via the shaft 26, a gearbox 28 and a shaft 38. The gearbox 28 is a planetary gearbox and comprises a sun gear 30, an annulus gear 32, a plurality of planet gears 34 and a planet gear carrier 36. The sun gear 30 meshes with the planet gears 34 and the planet gears 34 mesh with the annulus gear 32. The planet gear carrier 36 constrains the planet gears 34 to precess around the sun gear 30 in synchronicity whilst enabling each planet gear 34 to rotate about its own axis independently. The planet gear carrier 36 is coupled via the shaft 38 to the fan 13 in order to drive its rotation about the engine axis 9. The annulus gear 32 is coupled to a static structure 24. The axes of the planet gears 34 and the axis of the planet gear carrier 36 are parallel to the engine axis 9. The shaft 38 is rotatably mounted in static structure by one or more bearings, e.g. rolling element bearings, e.g. roller bearings or ball bearings. The shaft 26 is provided with external radially outwardly and axially extending splines 29 which interlock with internal radially inwardly and axially extending splines 31 provided on the sun gear 30 to transmit torque from the shaft 26 to the sun gear 30. The axially extending splines 29 and 31 are arranged parallel to the axis of the shaft 26 and the sun gear 30 respectively and hence when installed in the geared gas turbine engine 10 are arranged parallel to the engine axis 9.

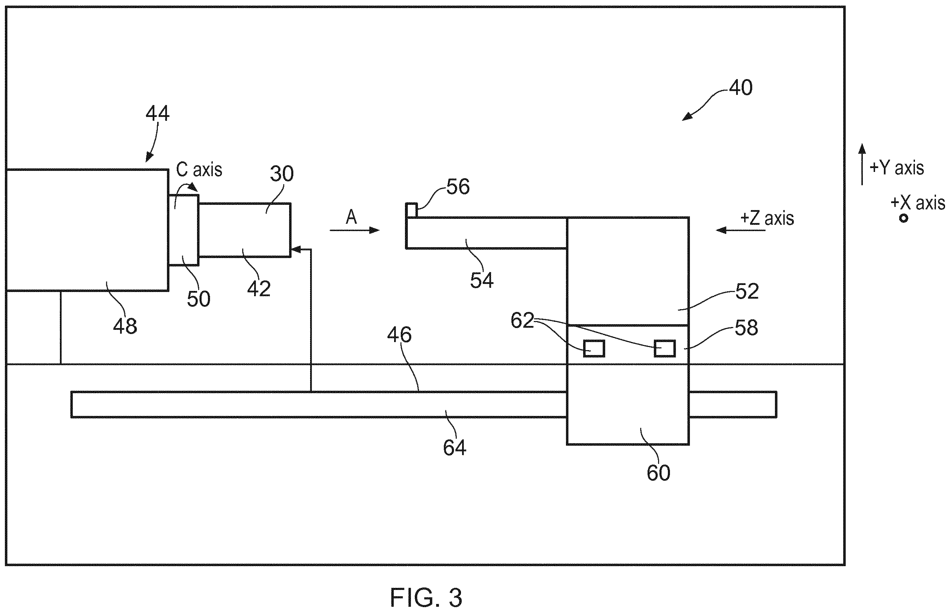

An apparatus 40 for machining splines on a workpiece 42 is shown in figures 3 to 5. The apparatus 40 comprises a machining centre 44 having at least four/five axes of freedom. A suitable machining centre 44 is a standard lathe-turn based platform, e.g. DMG Mori-Seiki NT5400. The machining centre 44, e.g. the DMG Mori-Seiki NT5400, has twin spindles, or twin chucks,

The machining centre 44 comprises a bed, or platform, 46, a headstock 48, a spindle, or chuck, 50, a toolpost 52, a tool holder 54, a tool 56, a cross-slide 58, a carriage 60, cross-rails 62 and longitudinal-rails 64. The bed, or platform, 46 in this example is arranged in a horizontal plane, but may be arranged in a vertical plane or in a plane at angle inclined to the horizontal and vertical planes. The headstock 48 is arranged at one end of the bed 46. The headstock 48 carries the spindle, or chuck, 50 which is rotatably mounted in the headstock 48 by suitable bearings. A motor, e.g. an electric motor, (not shown) is arranged to rotate the spindle, or chuck, 50 and the motor may be mounted within, or remote from the headstock 48. There may be speed changing gears, or speed changing mechanisms, between the motor and the spindle, or chuck, 50. The workpiece 42 is mounted, clamped, in the chuck 50 and the chuck 50 and workpiece 42 may be rotated about a rotational axis C by the motor. The chuck 50 and workpiece 42 are arranged coaxially with the rotational axis C. A first end of the tool holder 54 is mounted on, clamped in, the toolpost 52. The tool holder 54 is a generally cylindrical tool holder, but other suitable shapes may be used. The tool 56 is mounted on the second remote end of the tool holder 54 by one or more screws or bolts. The toolpost 52 is mounted on the cross-slide 58, the cross-slide 58 is mounted on the cross-rails 62 and the cross-rails 62 are fixed in the carriage 60. A motor, e.g. an electric motor, or other suitable mechanism (not shown) is arranged to move the cross-slide 58 back and forth laterally, sideways, side to side, relative to the bed 46 in the X axis. The carriage 60 is mounted on the longitudinal-rails 64 and the longitudinal-rails 64 are fixed on the bed 46. A motor, e.g. an electric motor, or other suitable mechanism (not shown) is arranged to move the carriage 60 back and forth, away from and towards the headstock 48, longitudinally relative to the bed 46 in the Z axis. The tool post 52 is also movable back and forth, up and down, in the Y axis.

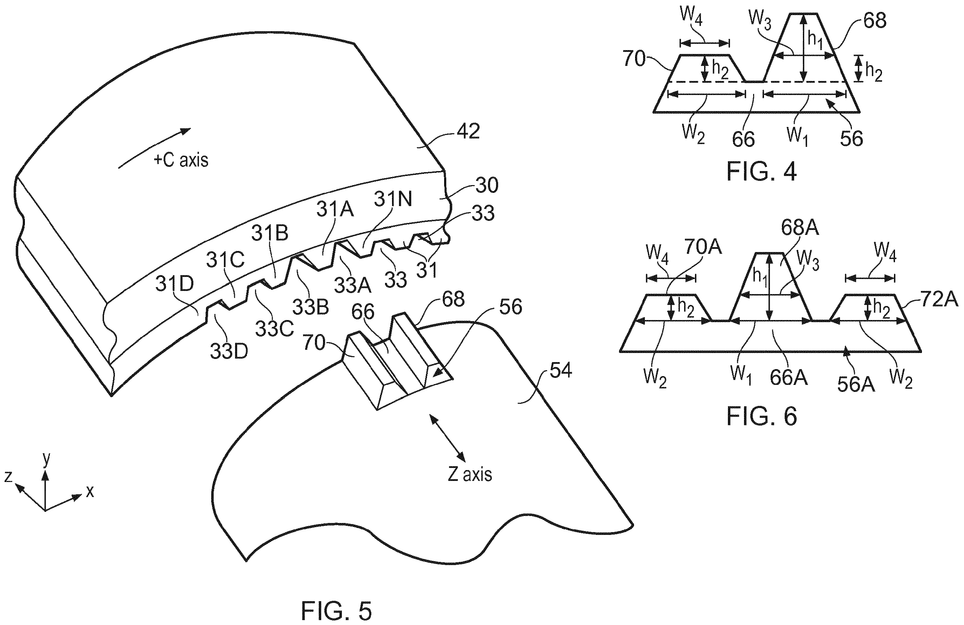

The tool 56, as shown more clearly in figure 4, comprises a base 66, a first tooth 68 extending radially from the base 66, a second tooth 70 extending radially from the base 66 and the second tooth 70 is spaced circumferentially from the first tooth 68. The first tooth 68 has a first height h₁, the second tooth 70 has a second height h₂ and the second height h₂ is less than the first height h₁. The second height h₂ may be half the first height h₁. The heights h₁ and h₂ are measured from the base 66. The first tooth 68 tapers from the base 66 to the tip of the first tooth 68, the second tooth 70 tapers from the base 66 to the tip of the second tooth 70 and the first tooth 68 is identical to the second tooth 70 to the second height h₂. The first tooth 68 is defined by and has straight sides extending from the base 66 to the tip of the first tooth 68 and the second tooth 70 is defined by and has straight sides extending from the base 66 to the tip of the second tooth 70. The first tooth 68 has a width measured between the straight sides of the first tooth 68 and the second tooth 70 has a width measured between the straight sides of the second tooth 70. In particular, the first tooth 68 has a first width w₁ measured at the point of connection of the first tooth 68 to the base 66, the second tooth 70 has a second width w₂ measured at the point of connection of the second tooth 70 to the base 66 and the first width w₁ is equal to the second width w₂. The first tooth 68 has a third width w₃ at a height h₂ above from the point of connection of the first tooth 68 to the base 66, the second tooth 70 has a fourth width w₄ at the tip of the second tooth 70 at a height h₂ above from the point of connection of the second tooth 70 to the base 66 and the third width w₃ is equal to the fourth width w₄. The width of the first tooth 68 at each height between the point of connection of the first tooth 68 to the base 66 and the point of the first tooth 68 at the second height h₂ is the same as the width of the second tooth 70 at the same height between the point of connection of the second tooth 70 to the base 66 and the tip of the second tooth 70 at the second height h₂.

The workpiece 42 may be a hollow cylindrical tube or a solid cylindrical tube. Splines may be machined on an internal surface and/or an external surface of a hollow cylindrical tube or splines may be machined on an external surface of a solid cylindrical tube.

An alternative tool 56A, as shown in figure 6, comprises a base 66A, a first tooth 68A extending radially from the base 66A, a second tooth 70A extending radially from the base 66A and a third tooth 72A extending radially from the base 66A. The second tooth 70A is spaced circumferentially from the first tooth 68A and the third tooth 72A is spaced circumferentially from the first tooth 68A. The first tooth 68A is located mid-way between the second tooth 70A and the third tooth 72A. The first tooth 68A has a first height h₁, the second tooth 70A has a second height h₂ and the second height h₂ is less than the first height h₁. The second height h₂ may be half the first height h₁. The first tooth 68A tapers from the base 66A to the tip of the first tooth 68A, the second tooth 70A tapers from the base 66A to the tip of the second tooth 70A and the first tooth 68A is identical to the second tooth 70A to the second height h₂. The third tooth 72A has a third height h₃, the third height h₃ is less than the first height h₁ and equal to the second height h₂, the third tooth tapers from the base 66A to the tip of the third tooth 72A, the third tooth 72A is identical to the second tooth 70A. The first tooth 68A is defined by and has straight sides extending from the base 66 to the tip of the first tooth 68A, the second tooth 70A is defined by and has straight sides extending from the base 66 to the tip of the second tooth 70A and the third tooth 72A is defined by and has straight sides extending from the base 66 to the tip of the third tooth 72A. The first tooth 68A has a width measured between the straight sides of the first tooth 68A, the second tooth 70A has a width measured between the straight sides of the second tooth 70A and the third tooth 72A has a width measured between the straight sides of the third tooth 72A. The heights h₁, h₂ and h₃ are measured from the base 66A. In particular, the first tooth 68A has a first width w₁ measured at the point of connection of the first tooth 68A to the base 66A, the second tooth 70A has a second width w₂ measured at the point of connection of the second tooth 70A to the base 66A, the third tooth 72A also has a width measured at the point of connection of the third tooth 72A to the base 66A equal to the second width w₂ and the first width w₁ is equal to the second width w₂. The first tooth 68A has a third width w₃ at a height h₂ above from the point of connection of the first tooth 68A to the base 66A, the second tooth 70A has a fourth width w₄ at the tip of the second tooth 70A at a height h₂ above from the point of connection of the second tooth 70A to the base 66A, the third tooth 72A has a width at the tip of the third tooth 72A at a height h₂ above from the point of connection of the third tooth 72A to the base 66A equal to the fourth width w₄ and the third width w₃ is equal to the fourth width w₄. The width of the first tooth 68A at each height between the point of connection of the first tooth 68A to the base 66A and the point of the first tooth 68A at the second height h₂ is the same as the width of the second tooth 70A at the same height between the point of connection of the second tooth 70A to the base 66A and the tip of the second tooth 70A at the second height h₂. Similarly, the width of the third tooth 72A at each height between the point of connection of the third tooth 72A to the base 66A and the tip of the third tooth 72A at the second height h₂ is the same as the width of the second tooth 70A at the same height between the point of connection of the second tooth 70A to the base 66A and the tip of the second tooth 70A at the second height h₂.

The teeth of the tool 56 or 56A may extend radially outwardly to machine splines on an internal surface of a workpiece 42, 30 or the teeth of the tool 56 or 56A may extend radially inwardly to machine splines on an external surface of a workpiece 42, 30.

A method of machining splines 31 on a workpiece 42, 30, with reference to figure 5, comprises providing the tool 56 on the tool holder 54 of the machining centre 44. The workpiece 42, 30 has an axis of rotation and the workpiece 42, 30 is located in the chuck 50 of the headstock 48. The workpiece 42, 30 and the tool 56 are rotatable relative to each other around the axis C of rotation of the workpiece 42, 30. The workpiece 42, 30 and the tool 56 are movable relative to each other axially of the workpiece 42, 30 in the Z axis. The method comprises moving the tool 56 axially towards and through the workpiece 42, 30 a first predetermined number of times such that the first tooth 68 rough cuts an initial portion of a spline 31. After each pass of the tool 56 axially through the workpiece for the first predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally. The tool 56 is moved axially towards and through the workpiece a second predetermined number of times such that the first tooth 68 rough cuts a remaining portion of the spline 31 and the second tooth 70 rough cuts an initial portion of an adjacent spline 31. After all but one of the passes of the tool 56 axially through the workpiece for the second predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally. The workpiece 42, 30 and the tool 56 are rotated relative to each other to a predetermined number of circumferentially spaced positions. At each circumferential position the tool 56 is moved axially towards and through the workpiece 42, 30 a second predetermined number of times such that the first tooth 68 rough cuts a remaining portion of the adjacent spline 31 and the second tooth 70 roughs cut an initial portion of a further adjacent spline 31. The workpiece 42, 30 and the tool 56 are rotated relative to each other to a final circumferential position. At the final circumferential position the tool 56 is moved axially towards and through the workpiece 42, 30 a second predetermined number of times such that the first tooth 68 rough cuts a remaining portion of a further adjacent spline 31 to form the final spline.

A method of machining splines 31 on a workpiece 42, 30, with reference to figure 5, comprises providing the tool 56 on the tool holder 54 of the machining centre 44. The workpiece 42, 30 has an axis of rotation and the workpiece 42, 30 is located in the chuck 50 of the headstock 48. The workpiece 42, 30 and the tool 56 are rotatable relative to each other around the axis C of rotation of the workpiece 42, 30. The workpiece 42, 30 and the tool 56 are movable relative to each other axially of the workpiece 42, 30 in the Z axis. The method comprises moving the tool 56 axially towards and through the workpiece 42, 30 a first predetermined number of times such that the first tooth 68 rough cuts an initial portion of a first axially extending slot 33A. After each pass of the tool 56 axially through the workpiece for the first predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally. The tool 56 is moved axially towards and through the workpiece 42, 30 a second predetermined number of times such that the first tooth 68 rough cuts a remaining portion of the first axially extending slot 33A and the second tooth 70 rough cuts an initial portion of a second axially extending slot 33B. After all but one of the passes of the tool 56 axially through the workpiece for the second predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally. The workpiece 42, 30 and the tool 56 are rotated relative to each other such that the first tooth 68 is aligned circumferentially with the second axially extending slot 33B and the tool 56 is moved axially towards and through the workpiece 42, 30 a second predetermined number of times such that the first tooth 68 rough cuts a remaining portion of the second axially extending slot 33B to form a first spline 31A and the second tooth 70 roughs cut an initial portion of a third axially extending slot 33C.

The method comprises relatively rotating the workpiece 42, 30 and the tool 56 to a further circumferential position such that the first tooth 68 is aligned circumferentially with the third axially extending slot 33C and moving the tool 56 axially towards and through the workpiece 42, 30 a second predetermined number of times such that the first tooth 68 rough cuts a remaining portion of the third axially extending slot 33C to form a second spline 31B and the second tooth 70 rough cuts an initial portion of a fourth axially extending slot 33D.

The method comprises relatively rotating the workpiece 42, 30 and the tool 56 to a final circumferential position such that the second tooth 70 is aligned circumferentially with the first axially extending slot 33A and moving the tool 56 axially towards and through the workpiece 42, 30 a second predetermined number of times such that the first tooth 68 rough cuts a remaining portion of a final axially extending slot 33N to form the final spline 31N.

A method of machining splines 31 on a workpiece 42, 30, with reference to figure 5, comprises providing the tool 56 on the tool holder 54 of the machining centre 44. The workpiece 42, 30 has an axis of rotation and the workpiece 42, 30 is located in the chuck 50 of the headstock 48. The workpiece 42, 30 and the tool 56 are rotatable relative to each other around the axis C of rotation of the workpiece 42, 30. The workpiece 42, 30 and the tool 56 are movable relative to each other axially of the workpiece 42, 30 in the Z axis. The method comprises moving the tool 56 axially towards and through the workpiece 42, 30 a first predetermined number of times such that the first tooth 68 rough cuts an initial portion of each of the confronting faces of first and second circumferentially adjacent axially extending splines 31A and 31B, moving the tool 56 axially towards and through the workpiece 42, 30 a second predetermined number of times such that the first tooth 68 rough cuts a remaining portion of each of the confronting faces of the first and the second circumferentially adjacent axially extending splines 31A and 31B and the second tooth 70 rough cuts an initial portion of each of the confronting faces of second and third circumferentially adjacent axially extending splines 31B and 31C, relatively rotating the workpiece such that the first tooth 68 is aligned circumferentially between the second and third circumferentially adjacent axially extending splines 31B and 31C, moving the tool 56 axially towards and through the workpiece 42, 30 a second predetermined number of times such that the first tooth 68 rough cuts a remaining portion of each of the second and third circumferentially spaced axially extending splines 31B and 31C to form the second spline 31B and the second tooth 70 roughs cut an initial portion of each of the confronting faces of third and fourth circumferentially spaced axially extending splines 31C and 31D.

The method comprises relatively rotating the workpiece 42, 30 and the tool 56 to a further circumferential position such that the first tooth 68 is aligned circumferentially between the third and fourth circumferentially spaced axially extending splines 31C and 31D, moving the tool 56 axially towards and through the workpiece 42, 30 a second predetermined number of times such that the first tooth 68 rough cuts a remaining portion of each of the confronting surfaces of the third and fourth circumferentially spaced axially extending splines 31C and 31D to form the third spline 31C and the second tooth 70 rough cuts an initial portion of each of the confronting faces of fourth and fifth circumferentially spaced axially extending splines 31D.

The method comprise relatively rotating the workpiece 42, 30 and the tool 56 to a final circumferential position such that the second tooth 70 is aligned circumferentially between the first and second circumferentially spaced axially extending splines 31A and 31B, moving the tool 56 axially towards and through the workpiece 42, 30 a second predetermined number of times such that the first tooth 68 rough cuts a remaining portion of each of the confronting faces of the final and first circumferentially spaced axially extending splines 31N and 31A to form the final and first splines 31N and 31A.

In the previously described methods of machining the splines, the splines are machined sequentially one after the other circumferentially around the workpiece. In a further method of machining splines, the splines are machined randomly circumferentially around the workpiece. In this case after the first slot is machined the workpiece and an adjacent slot is partially machined through the workpiece the workpiece and tool are relatively rotated to a circumferential position in which the first tooth of the tool is aligned with a desired position of a further slot between two adjacent circumferentially spaced axially extending splines and the tool is moved axially towards and through the workpiece a first predetermined number of times such that the first tooth rough cuts an initial portion of the further slot and then the tool is moved axially towards and through the workpiece a second predetermined number of times such that the first tooth rough cuts a remaining portion of the further slot and the second tooth rough cuts an initial portion of slot adjacent to the further slot. It is believed this method reduces the cumulative pitch deviation of the splines from their nominal positions.

The method comprises relatively rotating the workpiece 42, 30 and the tool 56 to a further circumferential position. The method comprises moving the tool 56 axially towards and through the workpiece 42, 30 a first predetermined number of times such that the first tooth 68 rough cuts an initial portion of a further axially extending slot 33. The tool 56 is moved axially towards and through the workpiece 42, 30 a second predetermined number of times such that the first tooth 68 rough cuts a remaining portion of the further axially extending slot 33 and the second tooth 70 rough cuts an initial portion of another axially extending slot 33.

The first predetermined number of times and the second predetermined number of times are equal, the first predetermined number of times cuts half the depth and the second number of times cuts the remainder of the depth.

The first tooth 68 is approximately 200 micrometres underside leaving additional material on the splines 31 which is machined off using a finishing tool, described below. The use of the tool 56 with the two teeth 68 and 70 as described to rough cut the splines followed by the use of a tool with a single tooth to finish the splines reduces tool wear and enables a workpiece 42, 30 with highly accurate splines 31 to be produced.

Generally, after each pass of the tool 56 axially through the workpiece for the first predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally. Generally, after all but one of the passes of the tool 56 axially through the workpiece for the second predetermined number of times the tool 56 is moved radially with respect to the axis C before the tool 56 is moved through the workpiece 42, 30 e.g. by moving the tool post 52 radially relative to the axis C of rotation by moving the tool post 52 up or down in the Y axis or alternatively by moving the cross-slide 58 laterally.

The method comprises initially providing a predetermined distance between the tool 56 and the workpiece 42, 30 such that the tool 56 has a greater distance to accelerate to reach a minimum velocity to cut the workpiece 42, 30. The predetermined distance is 6 centimetres/metres and the minimum velocity is 10 metres per minute. The use of a tool 56 travelling at a minimum velocity of y metres per second enables the machining of straight splines 31 with good quality.

The tool 56 is arranged to cut the slots 33, or splines 31, at top dead centre of the workpiece 42, 30. This has the advantage of ensuring that any swarf generated during the cutting of the slot 33, or spline 31, drops away from the workpiece 42, 30 and prevents swarf being dragged across the splines 31. However, the tool 56 may be arranged to cut the slots 33, or splines 32, at any other suitable position of the workpiece 42, 30, e.g. bottom dead centre of the workpiece.

The tool holder 54 may have a plurality of circumferentially spaced tools 56, each tool 56 comprises a first tooth 68 and a second tooth 70. The tools 56 may be equi-circumferentially spaced around the tool holder 54. The tool holder 54 may have two tools 56 arranged 180° apart and each tool 56 comprises a first tooth 68 and a second tooth 70. The use of a plurality of tools 56 on the tool holder 54 enables the tool holder 54 to be rotated such that if there is where on a tool 56 a further tool 56 may be used to rough machine the splines 31.

The tool holder 54 may have a tool 56 and a circumferentially spaced finishing tool. The tool 56 and finishing tool may be equi-circumferentially spaced around the tool holder 54. The tool holder 54 may have the tool 56 and the finishing tool arranged 180° apart. The use of the tool 56 and the finishing tool on the tool holder 54 enables the tool holder 54 to be rotated such when the tool 56 has rough machined all the splines 31 the finishing tool may be used to finish machine the splines 31.

Lubricant is supplied through the tool holder 54 to the tool 56 to reduce wear of the tool 56.

The method may comprise heat treating the workpiece 42, 30 after rough cutting the splines 31 on the workpiece 42, 30. The method may comprise final machining the splines using a tool with a single tooth after heat treating the workpiece 42, 30.

Thus, the method may be used to machine internal splines on a sun gear, external splines on an annulus gear, internal splines on a shaft, external splines on a shaft, internal splines on a rotor or external splines on a rotor.

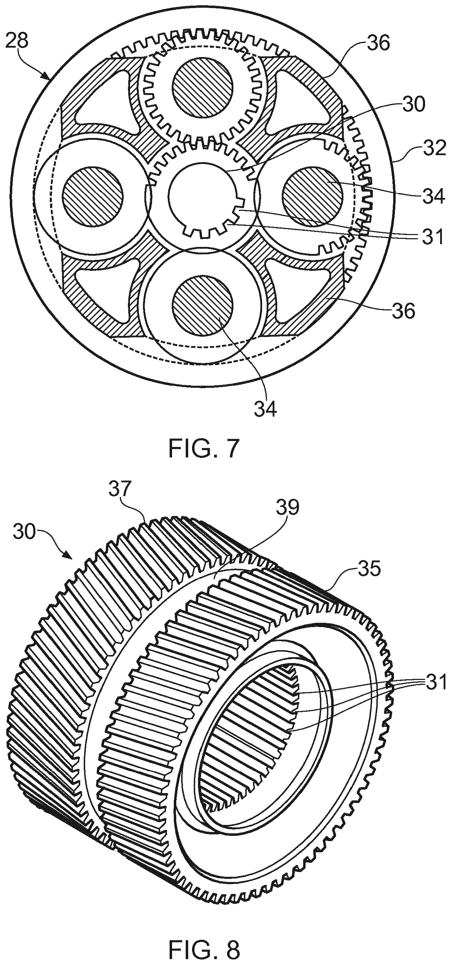

The method may also comprise machining the splines on an internal surface of the workpiece as described above and then machining gear teeth on an external surface of the workpiece without removing the workpiece from the machining centre, e.g. manufacturing a sun gear 30. The method may comprise machining helical gear teeth on the external surface of the workpiece, e.g. the helical gear teeth of single helical gear or the helical gear teeth of a double helical gear, as shown in figure 8. The helical gear teeth of the single helical gear have an involute profile or the helical gear teeth of the double helical gear have an involute profile.

The method may also comprise machining the splines on an external surface of the workpiece as described above and then machining gear teeth on an internal surface of the workpiece without removing the workpiece from the machining centre, e.g. manufacturing an annulus gear. The method may comprise machining helical gear teeth on the internal surface of the workpiece, e.g. the helical gear teeth of single helical gear or the helical gear teeth of a double helical gear. The helical gear teeth of the single helical gear have an involute profile or the helical gear teeth of the double helical gear have an involute profile.

The method of machining the gear teeth may comprise using a pencil tool having an involute profile. The method of machining the gear teeth may comprise moving the involute profile pencil tool axially/helically along a first side of a gear tooth and back axially/helically along the opposite side of the gear tooth. The involute profile pencil tool cuts both sides of the tooth in the same manner with respect to the workpiece, e.g. both sides are climb machined or down machined, and the cutting edge direction relative to the surface of the tooth is the same and this increases the consistency of the teeth circumferentially around the gear. In the case of a double helical gear, the involute profile pencil tool turns from the first side to the opposite side of the tooth through a gap 39 between the two sets of helical gears 35 and 37 as shown in figure 8. The involute profile cutting tool enables a smaller gap 39 to be provided between the two sets of helical gears 35 and 37 of the double helical gear and hence results in a double helical gear which is shorter in axial length and lighter in weight, e.g. about 10 to 15% reduction in weight. The pencil tool may be mounted in the turret of the machining centre, e.g. the DMG Mori-Seiki NT5400. As mentioned above, the machining centre, e.g. the DMG Mori-Seiki NT5400 has twin spindles, or twin chucks, and so the method comprises mounting the workpiece in both of the spindles, chucks, before machining the gear teeth and then machining the gear teeth while the workpiece is mounted on both of the spindles, chucks. The advantage of mounting the workpiece in or on both spindles, chucks, ensures that the workpiece is held more rigidly and this results in less deflections of the workpiece and hence the gear teeth are machined more accurately. The involute profile pencil tool may be a milling tool.

The axially extending splines 29 and 31 have a ratio of radial height to axial length for example of greater than or equal to 1 to 30 to less than or equal to 1 to 50. The axially extending splines for example may have a radial height of 3mm and an axial length of 140mm. The gear teeth of the single helical gear for example may have a radial height of 10mm and an axial length of 70mm or the gear teeth of a first set of gear teeth of a double helical gear for example may have a radial height of 10mm and an axial length of 70mm. The ratio of radial height to axial length of the gear teeth is greater than the ratio of radial height to axial length of the splines.

The advantage of machining the splines and then machining the gear teeth on the workpiece without removing the workpiece from the machining centre enables greater accuracy by minimising the number of times that the workpiece is set to a datum and enables the workpiece to be inspected while on the machining centre.

As described above, the gas turbine engine comprises a propulsor, an intermediate-pressure compressor, a high-pressure compressor, a high-pressure turbine and a low-pressure turbine, the high-pressure turbine is arranged to directly drive the high-pressure compressor, the low-pressure turbine is arranged to directly drive the intermediate-pressure compressor and the low-pressure turbine is arranged to drive the propulsor via a gearbox.

Alternatively, the gas turbine engine comprises a propulsor, an intermediate-pressure compressor, a high-pressure compressor, a high-pressure turbine and a low-pressure turbine, the high-pressure turbine is arranged to directly drive the high-pressure compressor, the low-pressure turbine is arranged to directly drive the propulsor and the low-pressure turbine is arranged to drive the intermediate-pressure compressor via a gearbox.

Alternatively, the gas turbine engine comprises a propulsor, an intermediate-pressure compressor, a high-pressure compressor, a high-pressure turbine, an intermediate-pressure turbine and a low-pressure turbine, the high-pressure turbine is arranged to directly drive the high-pressure compressor, the intermediate-pressure turbine is arranged to directly drive the intermediate-pressure compressor and the low-pressure turbine is arranged to drive the propulsor via a gearbox.

Alternatively the gas turbine engine may comprise a propulsor, a high-pressure compressor, a high-pressure turbine and a low-pressure turbine, the high-pressure turbine is arranged to directly drive the high-pressure compressor and the low-pressure turbine is arranged to drive the propulsor via a gearbox.

Alternatively, the gas turbine engine comprises a first propulsor, a second propulsor, an intermediate-pressure compressor, a high-pressure compressor, a high-pressure turbine, an intermediate-pressure turbine and a low-pressure turbine, the high-pressure turbine is arranged to directly drive the high-pressure compressor, the intermediate-pressure turbine is arranged to directly drive the intermediate-pressure compressor and the low-pressure turbine is arranged to drive the first propulsor and the second propulsor via a gearbox.

Alternatively, the gas turbine engine comprises a first propulsor, a second propulsor, a low-pressure compressor, a high-pressure compressor, a high-pressure turbine, a low-pressure turbine and a free power turbine, the high-pressure turbine is arranged to directly drive the high-pressure compressor, the low-pressure turbine is arranged to directly drive the low-pressure compressor and the free power turbine is arranged to drive the first propulsor and the second propulsor via a gearbox.

Alternatively, the gas turbine engine comprises a first propulsor, a second propulsor, a low-pressure compressor, a high-pressure compressor, a high-pressure turbine and a low-pressure turbine, the high-pressure turbine is arranged to directly drive the high-pressure compressor, the low-pressure turbine is arranged to directly drive the low-pressure compressor and the low-pressure turbine is arranged to drive the first propulsor and the second propulsor via a gearbox.

The sun gear may be driven by a low-pressure turbine, the annulus gear may be secured to static structure and the carrier may be arranged to drive a propulsor.

The sun gear may be driven by the low-pressure turbine, the carrier may be secured to static structure and the annulus gear may be arranged to drive a propulsor. In this arrangement each planet gear rotates about its own axis and the carrier does not rotate about the engine axis. The axes of the planet gears are parallel to the engine axis.

The carrier may be driven by the low-pressure turbine, the sun gear may be secured to static structure and the annulus gear may be arranged to drive a propulsor. The sun gear may be driven by the low-pressure turbine, the carrier may be arranged to drive a first propulsor and the annulus gear may be arranged to drive a second propulsor.

Although the present disclosure has been described with reference to planetary gearbox, star gearbox and differential gearbox arrangements it is equally possible for the gearbox to be arranged in a solar gearbox arrangement, e.g. the sun gear is secured to static structure and either the carrier is driven by an input drive shaft and the annulus gear drives an output drive shaft or the annulus gear is driven by an input drive shaft and the carrier drives an output drive shaft.

The propulsor may be a fan or a propeller.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A tool (56) for machining splines (31) on a workpiece (42, 30), the tool (56) comprising a base (66), a first tooth (68) extending radially from the base (66), a second tooth (70) extending radially from the base (66), the second tooth (70) being spaced circumferentially from the first tooth (68), the first tooth (68) having a first height (h₁), the second tooth (70) having a second height (h₂), the second height (h₂) being less than the first height (h₁), the first tooth (68) tapering from the base (66) to the tip of the first tooth (68), the second tooth (70) tapering from the base (66) to the tip of the second tooth (70), the first tooth (68) being identical to the second tooth (70) to the second height (h₂).

2. A tool as claimed in claim 1 wherein the second height (h₂) is half the first height (h₁).

3. A tool as claimed in claim 1 or claim 2 comprising a third tooth (72A) extending radially from the base (66A), the third tooth (72A) being spaced circumferentially from the first tooth (68A), the first tooth (68A) being located mid-way between second tooth (70A) and the third tooth (72A), the third tooth (72A) having a third height (h₃), the third height (h₃) being less than the first height (h₁_ and equal to the second height (h₂), the third tooth (72A) tapering from the base (66A) to the tip of the third tooth (72A), the third tooth (72A) being identical to the second tooth (70A).

4. A tool as claimed in claim 1, claim 2 or claim 3 wherein the teeth (68, 68A, 70, 70A, 72A) extend radially outwardly.

5. A tool as claimed in claim 1, claim 2 or claim 3 wherein the teeth extend radially inwardly.

6. An apparatus (40) for machining splines on a workpiece (42, 30), the apparatus (40) comprising a machining centre (44) having at least four/five axes of freedom, a tool holder (54) and a tool (56) as claimed in any of claims 1 to 5.

7. A method of machining splines on a workpiece (42, 30), the method comprising providing a tool (56), the tool (56) comprising a base (66), a first tooth (68) extending radially from the base (66), a second tooth (70) extending radially from the base (66), the second tooth (70) being spaced circumferentially from the first tooth (68), the first tooth (68) having a first height (h₁), the second tooth (70) having a second height (h₂), the second height (h₂) being less than the first height (h₁), the first tooth (68) tapering from the base (66) to the tip of the first tooth (68), the second tooth (70) tapering from the base (66) to the tip of the second tooth (70), the first tooth (68) being identical to the second tooth (70) to the second height (h₂), the workpiece (42, 30) having an axis of rotation, arranging the workpiece (42, 30) and the tool (56) such that they are rotatable relative to each other around the axis (C) of rotation of the workpiece (42, 30), arranging the workpiece (42, 30) and the tool (56) such that they are movable relative to each other axially of the workpiece (42, 30), moving the tool (56) axially towards and through the workpiece (42, 30) a first predetermined number of times such that the first tooth (68) rough cuts an initial portion of a first axially extending slot (33A), moving the tool (56) axially towards and through the workpiece (42, 30) a second predetermined number of times such that the first tooth (68) rough cuts a remaining portion of the first axially extending slot (33A) and the second tooth (70) rough cuts an initial portion of a second axially extending slot (33B), relatively rotating the workpiece (42, 30) such that the first tooth (68) is aligned circumferentially with the second axially extending slot (33B), moving the tool (56) axially towards and through the workpiece (42, 30) a second predetermined number of times such that the first tooth (68) rough cuts a remaining portion of the second axially extending slot (33B) to form a first spline (31A) and the second tooth (70) roughs cut an initial portion of a third axially extending slot (33C).

8. A method as claimed in claim 7 comprising relatively rotating the workpiece (42, 30) and tool (56) to a further circumferential position such that the first tooth (68) is aligned circumferentially with the third axially extending slot (33C), moving the tool (56) axially towards and through the workpiece (42, 30) a second predetermined number of times such that the first tooth (68) rough cuts a remaining portion of the third axially extending slot (33C) to form a second spline (31B) and the second tooth (70) rough cuts an initial portion of a fourth axially extending slot (33D).

9. A method as claimed in claim 7 or claim 8 comprising relatively rotating the workpiece (42, 30) and tool (56) to a final circumferential position such that the second tooth (70) is aligned circumferentially with the first axially extending slot (33A), moving the tool (56) axially towards and through the workpiece (42, 30) a second predetermined number of times such that the first tooth (68) rough cuts a remaining portion of a final axially extending slot to form the final spline (31N).

10. A method as claimed in any of claims 7 to 9 wherein the second height (h₂) is half the first height (h₁).

11. A method as claimed in any of claims 7 to claim 10 wherein the tool (56A) comprising a third tooth (72A) extending radially from the base (66A), the third tooth (72A) being spaced circumferentially from the first tooth (68A), the first tooth (68A) being located mid-way between second tooth (70A) and the third tooth (72A), the third tooth (72A) having a third height (h₃), the third height (h₃) being less than the first height (h₁) and equal to the second height (h₁), the third tooth (72A) tapering from the base (66A) to the tip of the third tooth (72A), the third tooth (72A) being identical to the second tooth (70A).

12. A method as claimed in any of claims 7 to 11 comprising initially providing a predetermined distance between the tool (56) and the workpiece (42, 30) such that the tool (56) reaches a minimum velocity to cut the workpiece (42, 30).

13. A method as claimed in any of claims 7 to 12 comprising machining the splines on an internal surface of an annular workpiece (42, 30).

14. A method as claimed in claim 13 wherein the annular workpiece is a sun gear (30).

15. A method as claimed in any of claims 7 to 14 comprising heat treating the workpiece after rough cutting the splines on the workpiece.

16. A method as claimed in claim 15 comprising final machining the splines (31) using a tool with a single tooth after heat treating the workpiece.

17. A method as claimed in any of claims 7 to 16 comprising machining the splines (31) on an internal surface of the workpiece (42, 30) and then machining gear teeth (35, 37) on an external surface of the workpiece (42, 30).

18. A method as claimed in claim 17 comprising machining helical gear teeth of a single helical gear or the helical gear teeth (35, 37) of a double helical gear.

19. A method as claimed in any of claims 17 to 18 machining the gear teeth (35, 37) using a pencil tool having an involute profile.
